# EUROPÄISCHE PATENTSCHRIFT

(11) **EP 1 426 108 B1**
(45) Veröffentlichungstag und Bekanntmachung des Hinweises auf die Patenterteilung: **18.07.2018**
(21) Anmeldenummer: 03028003.6
(22) Anmeldetag: 05.12.2003
(51) Int. Cl.: B01L 3/00, B41J 2/175, G01N 35/10

(54) **VORRICHTUNG ZUR PARALLELEN DOSIERUNG VON FLÜSSIGKEITEN**
DEVICE FOR PARALLEL DOSING OF LIQUIDS
DISPOSITIFS DE DOSAGES PARALLELES POUR LIQUIDES

(30) Priorität: 06.12.2002 DE 10257004
(43) Veröffentlichungstag der Anmeldung: 09.06.2004
(73) Patentinhaber: Boehringer Ingelheim microParts GmbH, 44227 Dortmund (DE)
(72) Erfinder: Müller-Chorus, Birgit, Dr., 48151 Münster (DE); Peters, Ralf-Peter, Dr. Dipl.-Phys., 51467 Bergisch-Gladbach (DE); Bartos, Holger, Dr. Dipl.-Biol., 44287 Dortmund (DE)
(74) Vertreter: Graefe, Jörg

(56) Entgegenhaltungen:
- WO-A-00/41550
- WO-A-02/060582
- DE-A- 10 041 536
- DE-C- 10 102 152
- US-A- 4 115 789
- US-A- 6 103 199
- US-A- 6 117 396
- US-A- 6 165 417
- US-A1- 2001 038 402
- US-A1- 2002 144 738
- US-B1- 6 196 664
- US-B1- 6 406 905
- US-B1- 6 448 090

## Beschreibung

Die vorliegende Erfindung betrifft eine Vorrichtung zur parallelen Dosierung einer Flüssigkeit. Die Vorrichtung weist Hauptkanal, Nebenkanäle, ein Einlass und Auslässe auf. Der Hauptkanal ist mit dem Einlass verbunden, während die Nebenkanäle mit je einem Auslass verbunden sind. Weiter sind die Nebenkanäle mit dem Hauptkanal verbunden.

Aus der Druckschrift WO 99/42805 ist eine Vorrichtung zur Dosierung einer Flüssigkeit bekannt. Die in dieser Druckschrift offenbarte Vorrichtung zur parallelen Dosierung einer Flüssigkeit der eingangs genannten Art weist als Übertragungsmittel für die Übertragung der Druckstöße, welche zum Entleeren der Vorrichtung auf die dosierten Flüssigkeitsmengen gegeben werden, kleine sich an die Nebenkanäle anschließende Kanäle auf. Alle diese als Übertragungsmittel ausgebildeten Kanäle münden in einem Druckstoß-Sammelkanal. Dieser Sammelkanal wird von einem außerhalb der Vorrichtung zur parallelen Dosierung einer Flüssigkeit befindlichen Vorrichtung zur Erzeugung von Druckstößen mit Druckstößen beaufschlagt. Die Druckstöße werden von dem Sammelkanal aufgenommen und über die als Übertragungsmittel ausgebildeten Kanäle an die Nebenkanäle und so auf die dosierten Flüssigkeiten geleitet. Dabei kann es unter anderem wegen der unterschiedlichen Entfernungen der Übertragungsmittel zu einem Druckmittelanschluss des Sammelkanals zu zeitlichen Unterschieden in der Wirkung der Druckstöße auf die dosierten Flüssigkeiten kommen. Dies kann zur Folge haben, dass bereits ein erster Nebenkanal bzw. eine erste Nebenkanalanordnung aus Auslass und Nebenkanal entleert ist, während weitere Kanäle noch die dosierte Flüssigkeit enthalten. Dies kann mitunter durchaus erwünscht sein, wenn jedoch ein erster Nebenkanal bzw. eine erste Nebenkanalanordnung bereits entleert ist, wird der Sammelkanal über den als Übertragungsmittel ausgebildeten Kanal und den Nebenkanal zum Auslass hin entlüftet. Der Druckstoß kann somit nicht mehr auf die übrigen Nebenkanalanordnungen wirken. Die darin enthaltenen dosierten Flüssigkeiten werden nicht ausgestoßen. Ein sinnvoller Einsatz einer solchen Vorrichtung ist nur bei besonderer Berücksichtigung und Ermittlung der Verteilung des Druckstoßes in dem Sammelkanal möglich.

Aus der Druckschrift mit der Veröffentlichungsnummer US 6,196,664 B1 ist eine Vorrichtung zum Ausbringen von Tintenstrahlen für Drucker bekannt, bei der aus Auslässen Tintenstrahlen ausgebracht werden können. Diese Auslässe werden über Nebenkanäle mit Tinte versorgt, die an einen Hauptkanal angeschlossen sind. Das Ausbringen der Tinte wird durch viele Druckerzeugungsmittel in Form von piezoelektrischen Elementen bewirkt, wobei jedem Auslass ein solches piezoelektrisches Element zugeordnet ist. Die Zuordnung eines piezoelektrischen Elements zu jedem Auslass ist notwendig, da die Auslässe zur Erzeugung von verschiedenen Druckbildern getrennt voneinander ansteuerbar sein müssen.

Durch die Zuordnung eines piezoelektrischen Elements zu jedem der Auslässe wird die in der Druckschrift beschriebene Vorrichtung technisch aufwendig.

Weiter ist aus der Druckschrift mit der Veröffentlichungsnummer US 2001/0038402 eine Vorrichtung bekannt, bei der in einem zweidimensionalen Gitter angeordnete Auslässe vorgesehen sind, durch die Tröpfchen aus der Vorrichtung ausgebracht werden können. Die in Gitterform angeordneten Auslässe sind dabei über Nebenkanäle mit einem Hauptkanal verbunden. Auf eine Wandung des Hauptkanals kann beispielsweise durch mechanischen Druck ein Druckstoß auf eine Seitenwand des Hauptkanals und von dort aus auf die Nebenkanäle übertragen werden, welcher Tröpfchen der in dem Hauptkanal und den Nebenkanälen eingefüllten Flüssigkeit über die Auslässe auswerfen. Die Auslässe weisen dabei piezoelektrische Elemente auf, die die Auslässe verschließen bzw. öffnen können, so dass jeder der Auslässe individuell bestimmt werden kann, über welchen Tröpfchen ausgebracht werden. Dieses ist für eine erfindungsgemäße Verwendung der Vorrichtung als Druckkopf für Tintenstrahldrucker beispielsweise notwendig, um verschiedene Druckbilder erzeugen zu können.

Der Druck der zum Auswerfen der Flüssigkeit auf die Seitenwand des Hauptkanals geübt wird, wirkt in Längsrichtung der Nebenkanäle und senkrecht zur Haupterstreckungsrichtung des Hauptkanals. Die Seitenwand ist zumindest an einem Ende gelagert. Gleichzeitig ist der Druck, der auf die Seitenwand ausgeübt wird, über die Länge der Seitenwand gleichbleibend. Ein Teil der Kraft, die auf die Seitenwand wirkt, wird dabei von der Lagerung der Seitenwand aufgenommen, ein anderer Teil führt zu einer Auslenkung der Seitenwand. Dadurch wird die Seitenwand in einzelnen Abschnitten unterschiedlich ausgelenkt, was im Hauptkanal eine örtlich unterschiedliche Druckwelle bewirkt. Die Druckverteilung innerhalb des Hauptkanals und demzufolge auch der Nebenkanäle ist daher unterschiedlich, welches zu unterschiedlichen Mengen führt, die über die Auslässe ausgestoßen werden. Eine Dosierung mit ausreichender Genauigkeit wie sie beispielsweise aus der Druckschrift WO 99/42805 gekannt ist, ist mit der Vorrichtung gemäß der Druckschrift US 2001/0038402 A1 nicht möglich.

Aus dem Dokument US 4 115 789 ist eine Tintenstrahl-Anordnung für Drucker bekannt, die eine Keramik- oder Plastik-Kammer-Einheit aufweist. In dieser Einheit ist eine Vielzahl von Kammern vorgesehen. Mit jeder Kammer ist eine Düseneinheit verbunden. Oberseiten der Kammern sind mit einer Membran verschlossen. An der Membran ist über jeder Kammer ein piezoelektrisches Element vorgesehen, mit dem eine Deformation der Membran erreicht werden kann, um auf die in den Kammern enthaltene Flüssigkeit einen Druck auszuüben, der die Flüssigkeit oder zumindest Teile der Flüssigkeit über die Düseneinheiten aus den Kammern transportiert. Jedes der piezoelektrischen Elemente ist in einer ihm zugeordneten Vertiefung in einem Träger vorgesehen.

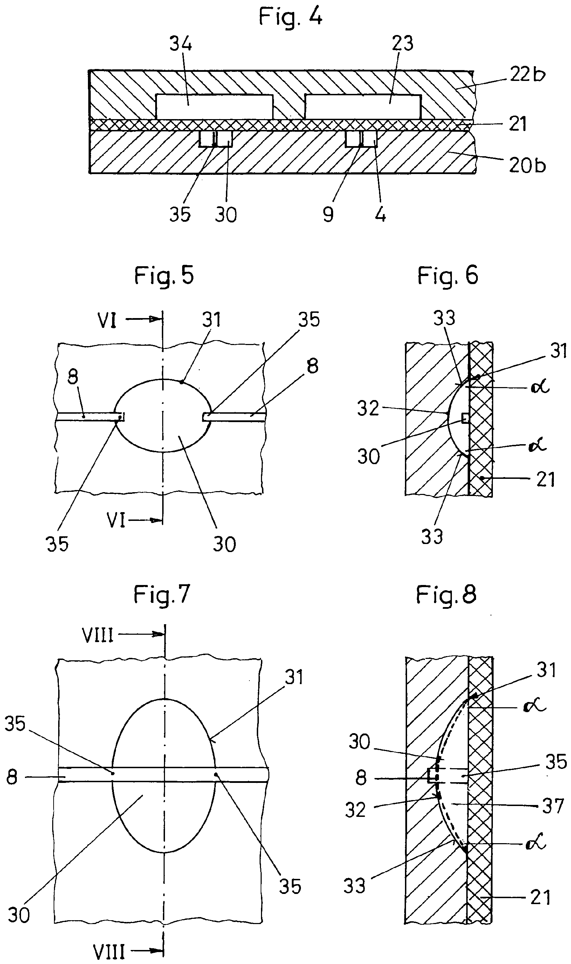

Schließlich ist aus dem Stand der Technik noch die Druckschrift mit der Veröffentlichungsnummer WO 02/060582 A2 bekannt. Diese Druckschrift offenbart mikrofluidische Vorrichtungen zum Dispensieren von Flüssigkeiten aus einem mikrofluidischem System. Die Druckschrift offenbart eine Vielzahl von sogenannten Perestaltikpumpen, durch welche eine Flüssigkeit in einem Kanal fortbewegt werden kann. Dabei wird an hintereinander liegenden Stellen in zeitlicher Abfolge ein Druckstoß auf die Wandung des Kanals ausgeübt, welches eine Flüssigkeit, in dem Kanal in die beiden Längsrichtungen des Kanals bewegt. Durch die zeitlich abgestimmten Druckstöße kann dadurch die Flüssigkeit in eine bevorzugte Längsrichtung fortbewegt werden. In Fig. 8a und Fig. 8b ist dabei eine Vorrichtung offenbart, bei der mehrere Kanäle nebeneinander angeordnet sind, die parallel mit Druckstößen beaufschlagt werden, um gleichzeitig in den Kanälen eine Flüssigkeit fortzubewegen. Ein Dosieren ist mit dieser Vorrichtung nicht möglich.

Aus dem Dokument DE 101 02 152 C2 ist eine Vorrichtung zum Dosieren kleiner Flüssigkeitsmengen bekannt, bei der eine Flüssigkeit von einem Reservoir über einen Hauptkanal in einen oder mehrere Nebenkanäle geleitet wird.

Der Erfindung liegt die Aufgabe zugrunde eine Vorrichtung vorzuschlagen, die technisch weniger aufwendig gestaltet ist und mit der ein paralleles Dosieren von kleinen Flüssigkeitsmengen mit ausreichender Genauigkeit möglich ist.

Aufgabe der Erfindung ist es ferner eine Vorrichtung vorzuschlagen, die einfach handhabbar, geeignet für die Bedienung durch Automaten, kostengünstig in der Herstellung und den verwendeten Materialien und als Einwegartikel geeignet ist.

Diese Aufgaben werden erfindungsgemäß durch eine Vorrichtung zur parallelen Dosierung einer Flüssigkeit gemäß Anspruch 1 gelöst. Bei einer derartigen Vorrichtung sind den Übertragungsmitteln und somit den Nebenkanalanordnungen zumindest ein Mittel zur Verhinderung einer strömungstechnischen Verbindung der Nebenkanäle mit der Kammer zugeordnet. Dieses Mittel zur Verhinderung einer strömungstechnischen Verbindung verhindert somit, nachdem der zugeordnete Nebenkanal über den jeweiligen Auslass entleert wurde, ein Entlüften der Vorrichtung über die Mittel zur Übertragung der Druckstöße. Damit ist gewährleistet, dass die Nebenkanalanordnungen auch zeitlich nacheinander entleert und die darin enthaltenen dosierten Flüssigkeiten ausgestoßen werden können. Der die Entleerung bewirkende Druckstoß kann von einem einzigen Mittel zur Erzeugung eines Druckstoßes erzeugt werden, der die dosierten Flüssigkeiten aus der Vorrichtung austreibt.

Eine weitere Aufgabe besteht darin eine Vorrichtung zur parallelen Dosierung einer Flüssigkeit der eingangs genannten Art vorzuschlagen, bei welcher eine gleichmäßige Entleerung aller Nebenkanalanordnungen auch dann möglich ist, wenn ein Druckstoß zeitlich mit unterschiedlichen Verzögerungen auf die Nebenkanäle bzw. Nebenkanalanordnungen wirkt.

Eine erfindungsgemäße Vorrichtung weist zur Lösung dieser Aufgabe in dem Hauptkanal steuerbare Mittel zur strömungstechnischen Entkopplung (Entkopplungsmittel) auf.
Die Entkopplungsmittel sind gemäß der Erfindung Ventile.
Diese Entkopplungsmittel sind zwischen dem Einlass und der ersten Verbindung des Hauptkanals mit einem der Nebenkanäle vorgesehen. Alternativ oder zusätzlich können zwischen allen Verbindungen von Hauptkanal und einem der Nebenkanäle die Entkopplungsmittel in dem Hauptkanal vorgesehen sein. Mittels eines Entkopplungsmittels im Hauptkanal zwischen dem Einlass und der ersten Verbindung des Hauptkanals mit einem der Nebenkanäle kann die Nebenkanalanordnung vom Einlass strömungstechnisch entkoppelt werden. Die Entkopplung bewirkt dabei, dass Druckwellen, nicht aus den Nebenkanalanordnungen über den Hauptkanal zum Einlass geleitet werden. Allenfalls ist denkbar, dass eine Druckwelle sehr stark gedämpft zum Einlass weitergeleitet wird. Damit eine Druckwelle aus dem System der Nebenkanäle zum Hauptkanal nur sehr gedämpft oder gar nicht übertragen wird, ist es beispielsweise ausreichend, durch das Entkopplungsmittel den Strömungswiderstand im Hauptkanal deutlich zu erhöhen.

Sind die Entkopplungsmittel dagegen auch zwischen den einzelnen Nebenkanälen vorgesehen, werden Druckwellen, die in einem Nebenkanal laufen nicht an die anderen insbesondere die benachbarten Nebenkanäle weitergegeben, da dies von den Entkopplungsmitteln verhindert wird.

Ein Entkopplungsmittel zwischen dem Einlass und der ersten Verbindung des Hauptkanals mit einem der Nebenkanäle und/oder zwischen allen Verbindungen des Hauptkanals mit einem der Nebenkanäle ermöglichen eine genauere Dosierung der Flüssigkeiten, die von der Dosiervorrichtung ausgebraucht werden soll. Dieses wird insbesondere vor dem Hintergrund der Druckschrift mit der Veröffentlichungsnummer US 6,196,664 B1 deutlich. Bei dem in dieser Druckschrift offenbarten Ausführungsbeispiel ist eine Dosierung insbesondere eine genaue Dosierung mittels der offenbarten Vorrichtung nicht möglich.

Dieses liegt an der folgenden Eigenheit der in Druckschrift beschriebenen Vorrichtung: Das piezoelektrische Element und der zugeordnete Auslass sind an gegenüberliegenden Seiten des Nebenkanals in den Seitenwänden des Nebenkanals vorgesehen. Ein Druckstoß, der die Tinte aus dem zugeordneten Auslass ausspritzt und von dem piezoelektrischen Element erzeugt wird, bewirkt eine Druckwelle im Nebenkanal die sich einerseits zum Ausspritzen der Tinte senkrecht zur Haupterstreckungsrichtung des Nebenkanals verläuft und zum anderen in Längsrichtung des Nebenkanals verläuft. Durch die sich in Längsrichtung des Nebenkanals ausbreitende Druckwelle und die Verbindung des Nebenkanals über den Hauptkanal zu weiteren Nebenkanälen kann die Tinte aus dem Nebenkanal zurück in den Hauptkanal gefördert werden und von dort unter Umständen in andere Nebenkanäle gelangen. Dieses kann zu Verschiebungen von Teilen der Tinte in andere Nebenkanäle führen, welche eine genaue Dosierung der Tinte, die über die Auslässe ausgespritzt wird, nicht möglich macht. Die in der Druckschrift offenbarte Vorrichtung dient zwar dem parallelen Ausbringen von Tinte; ein Dosieren der ausgebrauchten Menge ausreichender Genauigkeit ist mit der Vorrichtung jedoch nicht möglich.

Gemäß der Erfindung kann es sich bei dem Mittel zur Verhinderung um eine erste elastische und zumindest im Wesentlichen undurchlässige Folie handeln. Diese Folie verhindert dabei eine strömungstechnische Verbindung zwischen den Nebenkanälen über die Übertragungsmittel zu der übrigen Vorrichtung. Bei der Folie kann es sich erfindungsgemäß um eine Kunststofffolie, eine Elastomerfolie oder eine Siliziumfolie handeln.

Bei den Hauptkanälen und den Nebenkanälen kann es sich gemäß der Erfindung um Nuten handeln, welche in einer ersten Außenfläche des ersten Körpers vorgesehen sind. Der Hauptkanal und/oder die Nebenkanäle können gemäß der Erfindung zumindest abschnittsweise Kapillare sein. Dieses ermöglicht bzw. verhindert in bestimmten Abschnitten des Hauptkanals oder Nebenkanäle einen Transport einer Flüssigkeit ohne äußere Kräfte. Vorteilhaft ist es insbesondere, wenn die an den Hauptkanal anstoßenden Abschnitte der Nebenkanäle Kapillare sind. Der Transport in den Kapillaren wird beispielsweise ermöglicht, wenn die wirkenden Kapillarkräfte nach einer Benetzung der Kanalbegrenzungsflächen die Flüssigkeit in dem Kanal vorantreiben. Dazu muss der Kanal entlüftet werden. Ist eine Entlüftung nicht möglich, ist ein Transport in Kapillaren nicht möglich. Sind also in der erfindungsgemäßen Vorrichtung insbesondere Abschnitte der Nebenkanäle vorgesehen, die nicht entlüftet werden, ist ein Transport der Flüssigkeit in diesem Nebenkanalabschnitt nicht möglich.

Die Mittel zur Übertragung sind vorteilhaft als erste Ausnehmungen ausgebildet, wobei diese ersten Ausnehmungen dann an einem ersten Ende jedes Nebenkanals angeordnet sein können, während die Auslässe an zweiten Enden jedes Nebenkanals vorgesehen sind. Die ersten Ausnehmungen haben zumindest in einem Bereich in dem die Nebenkanäle in die ersten Ausnehmungen eintreten, eine seitliche Begrenzungsfläche, die möglichst senkrecht zu der Außenfläche des ersten Körpers steht, in welche die erste Ausnehmung eingebracht wird.

Die erste Folie kann gemäß der Erfindung auf der ersten Außenfläche des ersten Körpers aufliegen. Die erste Folie kann durch Bonden an dem ersten Körper befestigt sein. Die erste Folie kann zumindest die ersten Ausnehmungen abdecken und somit eine strömungstechnische Verbindung aus den Nebenkanälen über die ersten Ausnehmungen zur übrigen Vorrichtung verhindern. Die erste Folie kann gemäß der Erfindung im Bereich der ersten Ausnehmung durch Bonden an dem Körper befestigt sein, so dass die Folie in den sich an den Rand der Ausnehmung anschließenden Bereichen fest mit dem ersten Körper verbunden ist.

Die erfindungsgemäße Vorrichtung kann einen zweiten Körper aufweisen. Der zweite Körper kann auf der ersten Folie aufliegen, wobei der zweite Körper und die erste Folie vorteilhaft zumindest die erste Kammer einschließen. Die erste Kammer kann dann mit einem Mittel zur Erzeugung von Druckstößen strömungstechnisch verbindbar sein. Diese Kammer kann im Grunde beliebig geformt sein und es können auch Elemente vorgesehen sein, die in die Kammer hineinragen. Die einzelnen Bereiche der Kammer sollten jedoch untereinander miteinander verbunden sein.

Die erste Kammer kann gemäß der Erfindung unter Zwischenschaltung der ersten Folie mit den Übertragungsmitteln zur Übertragung von Druckstößen verbunden sein. Der zweite Körper kann Mikrostrukturelemente aufweisen, die vorteilhaft in die Kammer hineinragen. Diese Mikrostrukturelemente können beispielsweise dazu dienen, die erste Folie an dem ersten Körper festzulegen. Die erste Folie wäre dann zwischen Mikrostrukturelementen und dem ersten Körper eingeklemmt. Damit ist es beispielsweise möglich die erste Folie im Bereich der ersten Ausnehmungen an dem ersten Körper festzulegen.

Dadurch, dass die ersten Ausnehmungen im Bereich der Eintritte der Nebenkanäle in die ersten Ausnehmungen senkrecht stehen, ist verhindert, dass sich die erste Folie bei einer Beaufschlagung mit einem Druck so in die erste Ausnehmung wölbt, dass die Eintritte der Nebenkanäle in die erste Ausnehmung verschlossen sind. Die Druckstöße können daher in die Nebenkanäle übertragen werden.

Das erste Druckmedium mit welchem die erste Kammer gefüllt ist, kann unter einem Druck stehen, der einen ersten Betrag hat und der sicherstellt, dass die erste Folie an dem ersten Körper festgelegt ist. Wird der Druck des Druckmediums erhöht und zwar auf einen zweiten Betrag, können beispielsweise die die Entkopplungsmittel bildenden Ventile geschlossen werden. Dazu müsste dann die erste Kammer auch die Ventile übergreifen. Wird der Druck durch einen Druckstoß auf einen dritten Betrag erhöht, wird dieser Druckstoß über die erste Folie auf die ersten Übertragungsmittel gegeben, welche dann das Ausstoßen der Flüssigkeiten aus der Vorrichtung bewirken.

Die erste Kammer einer erfindungsgemäßen Vorrichtung kann eine Höhe von 0,1 mm bis 3 mm haben.

Gemäß der Erfindung kann die Vorrichtung auch selbst ein Mittel zur Erzeugung von Druckstößen aufweisen. Die Druckstöße können auch unmittelbar durch ein mechanisches oder elektromechanisches Mittel auf die Folie gegeben werden. Als Mittel zur Erzeugung von Druckstößen sind beispielsweise piezoelektrische Elemente, Elektromagneten oder andere elektromechanische oder mechanische Mittel denkbar.

Die erste Kammer kann vorzugsweise eine von dem zweiten Körper gebildete Wand haben, die unter Einwirkung eines Mittels zur

Erzeugung eines Druckstoßes in das Innere der Kammer auslenkbar ist, wodurch der Druckstoß in der Kammer erzeugt wird.

In den Nebenkanälen können Mittel zur Dosierung (Dosierungsmittel) der Flüssigkeit vorgesehen sein. Die Dosierungsmittel sind vorteilhaft zwischen den Auslässen und der Verbindung zwischen dem zugeordneten Nebenkanal und dem Hauptkanal vorgesehen. Die Vorrichtung kann als Dosierungsmittel zweite Ausnehmungen in der ersten oder in einer anderen Außenfläche des Körpers aufweisen. Diese zweiten Ausnehmungen können von der Membran, von einer zweiten Folie oder einem Deckel abgedeckt sein.

Die Ventile einer erfindungsgemäßen Vorrichtung können durch eine dritte Ausnehmung und eine Folie, das heißt entweder der ersten oder der zweiten oder einer dritten Folie gebildet sein. Weiter ist denkbar, dass auch Ventile in Nebenkanälen angeordnet sind.

Gemäß der Erfindung kann die erste Kammer die erste, zweite oder dritte Folie im Bereich der dritten Ausnehmung bzw. der dritten Ausnehmungen übergreifen. Der zweite Körper und der erste Körper können aber auch eine zweite Kammer einschließen, die die erste, zweite oder dritte Folie im Bereich der dritten Ausnehmung übergreift. Die zweite Kammer kann ein zweites Druckmedium enthalten, welches auf die den dritten Ausnehmungen zugeordneten Abschnitte der ersten, zweiten oder dritten Folie einwirkt.

Gemäß der Erfindung können die erste und die zweite Kammer getrennt ansteuerbar sein.

Die dritten Ausnehmungen können erfindungsgemäß von zumindest einem Teil der Ränder zum Boden flach abfallende seitliche Begrenzungsflächen haben. Die Ausnehmung kann so die Form der sich bei Einwirkung eines Druckstoßes in die dritte Ausnehmung wölbenden Folien nachbilden. Dadurch ist es möglich, dass die Folie den Strömungswiderstand des Ventils deutlich erhöht bzw. eine Verbindung über die Ventile unmöglich macht. Die flach abfallenden seitlichen Begrenzungsflächen können dabei in einem Winkel zwischen 5 bis 45 Grad geneigt sein.

Die dritten Ausnehmungen können eine konkave Wölbung haben, die beispielsweise sphärisch aber auch asphärisch sein kann. Die Wölbung kann darüber hinaus auch zylindrisch sein.

Eine erfindungsgemäße Vorrichtung kann zwischen zwei Eintrittsöffnungen von Abschnitten des Hauptkanals in zumindest einen Teil der dritten Ausnehmungen sich von einem ersten Rand über die seitlichen Begrenzungsflächen und den Boden zu einem zweiten Rand erstreckenden Steg aufweisen. Dieser Steg ragt in Richtung der die dritten Ausnehmung abdeckenden Folie, so dass, wenn die Folie bei einer entsprechenden Druckbeaufschlagung ausgelenkt wird, sich die Folie auf den Steg legt und so die beiden Eintrittsöffnungen der Hauptkanalabschnitte voneinander fluidisch trennt.

Die dritten Ausnehmungen einer erfindungsgemäßen Vorrichtung können eine Tiefe aufweisen, die dem 0,9 bis 1,5-fachen der Tiefe des Hauptkanals entspricht. Hat die dritte Ausnehmung eine Tiefe die dem 0,9 bis 1-fachen der Tiefe des Hauptkanals entspricht, können die beiden Eintrittsöffnungen der Hauptkanalabschnitte über eine Nut im Boden bzw. in den seitlichen Begrenzungsflächen der Ausnehmung verbunden sein.

Die zu dosierende Flüssigkeit kann entweder zum Befüllen der Vorrichtung über Kapillarwirkung in den Hauptkanal und die Nebenkanäle steigen oder aber ein Druckgefälle drückt oder saugt die Flüssigkeit in den Hauptkanal und in die Nebenkanäle.

Durch die Volumina der Dosiermittel und/oder der Nebenkanäle und/oder des Hauptkanals kann das Volumen der dosierbaren Flüssigkeitsmenge festgelegt werden, wodurch ein Flüssigkeitsüberschuss minimiert werden kann. Die Auslässe für die Flüssigkeit können auf ein geeignetes Rastermaß (z.B. 4,5 oder 2,25 mm) angepasst werden, damit die Flüssigkeiten präzise z.B. in eine Mikrotiterplatte dispensiert werden können.

Es kann bei einer erfindungsgemäßen Vorrichtung sowohl ein zentrales Mittel zur Erzeugung von Druckstößen vorgesehen sein; es können aber auch für jeden Nebenkanal einzeln steuerbare Mittel zur Erzeugung von Druckstößen vorgesehen sein. Die Auslässe können beim Einfüllen der Flüssigkeit in den Hauptkanal und die Nebenkanäle geöffnet sein, damit in den Kanälen enthaltene Luft entweichen kann. Nach dem Füllen werden diese Auslässe dann verschlossen. Dafür können Mittel zum Verschließen der Auslässe vorgesehen sein. Bei den Mitteln kann es sich z.B. um eine elastische Matte handeln.

In einer erfindungsgemäßen Vorrichtung können bereits Reagenzien eingebracht sein. Diese können dann insbesondere im Bereich der Übertragungsmittel, an den Auslässen und den Nebenkanälen, in den Ventilen oder in den Dosiermitteln eingebracht sein. Damit ist es möglich, schon innerhalb der Vorrichtung Reaktionen z.B. für Analysen durchzuführen. Bei den Reagenzien kann es sich beispielsweise um Chemikalien, Oligonukleotide, sogenannte Magnetkugeln, Farbstoffe, Peptide, Proteine, Fette oder anderes handeln. Die Reaktionen können in der Vorrichtung selbst oder auch nach dem Verlassen der Vorrichtung z.B. in einer Mikrotiterplatte durchgeführt werden.

In weiteren Ausführungsformen einer erfindungsgemäßen Vorrichtung können weitere Prozessschritte ermöglicht sein. Dabei kann es sich z.B. um das Waschen von gebundenen oder absorbierten Substanzen oder von sogenannten Magnetkugeln handeln. Die Auswertung der auf der Vorrichtung durchgeführten Reaktionen können in der oder nach (partieller) Entleerung über die Auslässe außerhalb der Vorrichtung erfolgen.

Ferner können Mittel zum Temperieren vorgesehen sein, welche zumindest Teile der Vorrichtung vor, während oder nach der Reaktion temperieren.

Die pro Nebenkanalanordnung zu dispensierende Flüssigkeitsmenge kann gemäß der Erfindung im Bereich von Pikolitern bis Millilitern liegen, bevorzugt sind jedoch Flüssigkeitsmengen im Bereich von Nanolitern bis Mikrolitern.

Ferner ist es denkbar, dass einzelne Ausnehmungen, Kapillarstopps und/oder Ventile einzeln und gezielt angesteuert werden. Dieses kann z.B. dadurch erreicht werden, dass die Ausnehmungen geometrisch so gestaltet sind (Aspektverhältnis), dass sie bei unterschiedlichen Schwellenwerten in einer vorher festgelegten Reihenfolge durch den Druck auf eine der Membranen verschlossen bzw. betätigt wird.

Der erste Körper kann gemäß der Erfindung aus Kunststoffen (z.B. durch Abformung, Prägen, Fräsen oder Gießen), Metall, Wachs, Gummi, Silizium, Glas, Keramik oder ähnlichem gefertigt werden. Ebenso ist es denkbar, dass das System aus Kanälen und Ausnehmungen auf zwei Seiten des ersten Körpers angeordnet ist. Dadurch kann die Anzahl der dosierbaren Flüssigkeitsmengen auf kleinem Raum vergrößert werden.

Ausführungsbeispiele von Vorrichtungen zur parallelen Dosierung einer Flüssigkeit werden anhand der Zeichnung näher beschrieben. Darin zeigt
- Fig. 1: einen ersten Körper eines ersten, nicht erfindungsgemäßen Ausführungsbeispiels in Draufsicht, wobei die einzelnen Elemente zum Teil nur schematisch angedeutet sind,
- Fig. 2: einen Schnitt durch den ersten Körper gemäß Fig. 1 entlang der Linie II-II, wobei die einzelnen Elemente zum Teil nur schematisch angedeutet sind,
- Fig. 3: einen ersten Körper eines zweiten, erfindungsgemäßen Ausführungsbeispiels in Draufsicht, wobei die einzelnen Elemente ebenfalls zum Teil nur schematisch angedeutet sind und
- Fig. 4: einen Schnitt durch den ersten Körper gemäß Fig. 2 entlang der abknickenden Linie IV-IV, wobei die einzelnen Elemente zum Teil nur schematisch angedeutet sind,
- Fig. 5: eine Draufsicht auf ein Ventil, in einer tatsächlichen Ausführung,
- Fig. 6: einen Schnitt durch das Ventil gemäß Fig. 5 entlang der Linie VI-VI,
- Fig. 7: eine Draufsicht auf ein zweites Ventil, in tatsächlicher Ausführung,
- Fig. 8: ein Schnitt durch das Ventil gemäß Fig. 7 entlang der Linie VIII-VIII,
- Fig. 9: eine Draufsicht auf ein Drittes Ventil in tatsächlicher Ausführung und
- Fig. 10: einen Schnitt durch das Ventil gemäß Fig. 9 entlang der Linie X-X.

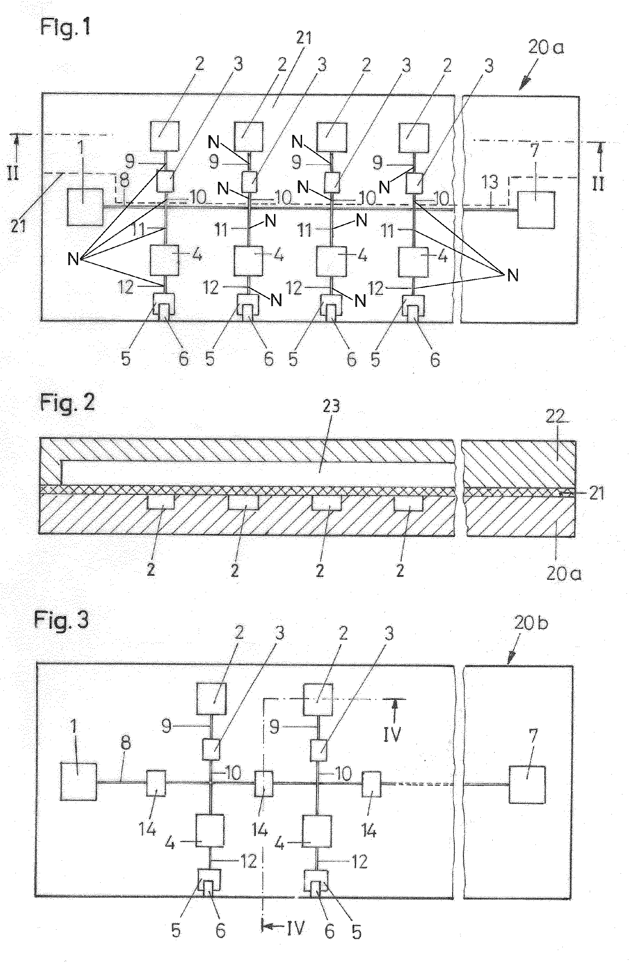

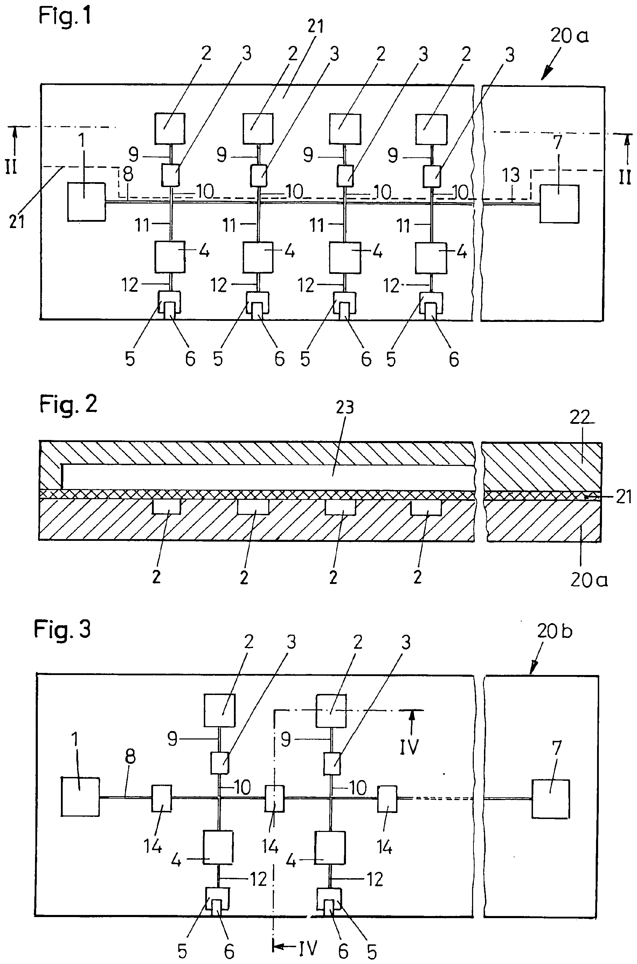

Der in Fig. 1 und 2 dargestellte erste Körper 20 einer nicht erfindungsgemäßen Vorrichtung zur parallelen Dosierung einer Flüssigkeit und ggf. zur Dispensierung der Flüssigkeit - beispielsweise auf eine Mikrototiterplatte - weist einen Einlass 1 für die zu dosierende Flüssigkeit und eine Anzahl von Auslässen 6 auf. Der Einlass 1 und die Auslässe 6 sind von einem System von Kanälen miteinander verbunden. Das System von Kanälen besteht dabei aus einem Hauptkanal 8 und Nebenkanälen N, wobei jedem Nebenkanal N ein Auslass 6 zugeordnet ist (Nebenkanalanordnungen). Zu dem System von Kanälen gehört ferner ein Kanal 13, welcher zu einem Abfallsammler 7 geführt ist.

Die Nebenkanäle N sind in mehrere Kanalabschnitte 9, 10, 11, 12 unterteilt. Die beiden Kanalabschnitte 10, 11 zweigen dabei unmittelbar von dem Hauptkanal 8 in entgegengesetzte Richtungen rechtwinklig von dem Hauptkanal 8 ab.

Der Kanalabschnitt 10 jedes Nebenkanals N mündet in einen ersten (schematisch angedeuteten) Kapillarstopp 3 von dem aus sich jeder Nebenkanal N mit dem Nebenkanalabschnitt 9 bis zu einer ersten Ausnehmung 2 fortsetzt.

Der Kanalabschnitt 11 jedes Nebenkanals N mündet dabei in eine zweite (schematisch angedeutete) Ausnehmung 4. Von dieser zweiten Ausnehmung 4 führt der Kanalabschnitt 12 jedes Nebenkanals N zu einem Kapillarstopp 5. An diesen zweiten Kapillarstopps 5 schließt sich jeweils der Auslass 6 an.

Der Abfallsammler 7 wird durch eine weitere (schematisch angedeutete) Ausnehmung 7 gebildet, die über einen nicht dargestellten Kanal entlüftet ist.

Sowohl die erste Ausnehmung 2, die zweite Ausnehmung 4, die weitere Ausnehmung 7, der Hauptkanal 8 als auch die Nebenkanalabschnitte 9, 10, 11, 12 sind in einer Fläche des ersten Körpers 20a eingebracht. Das heißt, dass die Ausnehmungen 2, 4, 7, der Hauptkanal 8 und die Nebenkanalabschnitte 9, 10, 11, 12 nach oben hin offen sind. Die Nebenkanalabschnitte 9, 10, 11, 12 und der Hauptkanal 8 sind dabei als Nuten in der Oberfläche des ersten Körpers 20a vorgesehen. Grundsätzlich ist es auch denkbar, die Ausnehmungen und Kanäle auf verschiedenen Flächen des ersten Körpers 20a vorzusehen.

Der erste Kapillarstopp 3 und der zweite Kapillarstopp 5 sind ebenfalls in Form von Ausnehmungen in der Fläche des ersten Körpers 20a eingebracht.

Die Fläche des ersten Körpers 20a, zu welcher die Ausnehmungen 2, die Nebenkanalabschnitte 9, 10, 11, der Hauptkanal 8 und die ersten Kapillarstopps 3 geöffnet sind, ist wie in Fig. 2 gestrichelt angedeutet von einer Folie 21 abgedeckt. An diese Folie 21 schließt sich dann, wie ebenfalls in Fig. 2 gestrichelt angedeutet, ein zweiter Körper 22 an. Die übrigen Kavitäten 4, 5, 7, 12 in der Fläche des Körpers sind dagegen unmittelbar von dem zweiten Körper 22 abgedeckt. Dabei ist oberhalb der ersten Ausnehmungen 2 und der ersten Kapillarstopps 3 zwischen der Folie 21 und dem zweiten Körper 22 eine Kammer 23 ausgebildet. Diese Kammer 23 wird vorteilhaft wie in der Fig. 2 dargestellt durch eine entsprechend große Ausnehmung in dem zweiten Körper 22 gebildet.

Die Abdeckung der ersten Ausnehmungen 2 des Hauptkanals 8, der ersten Kapillarstopps 3 und der Nebenkanalabschnitte 9, 10, 11 durch die Folie 21 hat zur Folge, dass die vorgenannten ersten Ausnehmungen 2, der Hauptkanal 8, die Nebenkanalabschnitte 9, 10, 11 und die Kapillarstopps 3 nach oben hin, das heißt zur Außenseite des ersten Körpers 20a hin, begrenzt sind. Die übrigen Kavitäten sind dagegen durch den zweiten Körper 22 begrenzt. Dadurch ergibt es sich, dass eine Flüssigkeit, welche über den Einlass 1 in das System von Kanälen bzw. in den Kanälen oder an deren Ende angeordneten Ausnehmungen und Kapillarstopps gelangt ist, nur noch über die Auslässe 6 bzw. dem Abfallsammler 7 wieder der Anordnung aus erstem Körper 20a und Folie 21 bzw. erstem Körper 20a, Folie 21 und zweitem Körper 22 entnommen werden kann.

Die Ausnehmungen 2 sind so ausgebildet, dass die Folie 21 bei einer entsprechenden Druckbeaufschlagung von außen in die durch die Ausnehmungen 2 ausgebildeten Kavitäten eindringen kann.

Die Kapillarstopps können beispielsweise durch einfache Aufweitungen der Kanäle gebildet werden. Sie können aber auch alternativ eine hydrophobe Beschichtung aufweisen, welches das Durchtreten von Flüssigkeit durch die Kapillarstopps verhindert.

Die Eindringtiefe der Folie 21 in die genannten Kavitäten kann durch die Form und Größe der Kavitäten unter anderem durch das sogenannte Aspektverhältnis eingestellt werden. Dabei kennzeichnet das Aspektverhältnis nichts anderes, als das Verhältnis der Tiefe der Ausnehmung zu deren Breite. Auch die Kanäle, das heißt der Hauptkanal 8 und die Nebenkanalabschnitte 9, 10, 11, 12, können mit einem Aspektverhältnis gekennzeichnet werden, wobei das Aspektverhältnis bei den Kanälen so eingestellt ist, dass bei einer Druckbeaufschlagung der Folie 21 von außen die Folie 21 die Kanäle nicht verschließt.

Die zweiten Ausnehmungen 4 sind im ersten Körper 20a als Mittel zur Dosierung der über den Einlass 1 in den ersten Körper 20a eingebrachten Flüssigkeit vorgesehen. Das heißt, die Ausnehmungen 4 haben ein Volumen, welches im Wesentlichen in dem zu dosierenden und über die Auslässe 6 auszugebenden Volumen entspricht. Dabei muss berücksichtigt werden, dass auch in den Kanalabschnitten 10, 11, 12 Flüssigkeit enthalten sein kann, welche mit hoher Wahrscheinlichkeit ebenfalls über dem jeweiligen Auslass 6 dispensiert wird. Dabei verhindert bei dem ersten Körper 20a der Kapillarstopp 3 zwischen den Kanalabschnitten 9 und 10 in jedem Nebenkanal N ein Eintreten der Flüssigkeit in den Kanalabschnitt 9 und darüber hinaus in die erste Ausnehmung 2.

Die erste Ausnehmung 2 ist als Mittel zur Übertragung eines Druckstoßes eingerichtet. Von außen wird über diese Übertragungsmittel ein Druckstoß in jeden der Nebenkanäle N geleitet, welcher dann die in den Nebenkanalabschnitten 10, 11, 12 und in den Mitteln zur Dosierung, das heißt in den zweiten Ausnehmungen 4 enthaltene Flüssigkeit über die jeweiligen Auslässe 6 aus der Vorrichtung zur Dosierung ganz oder teilweise hinausdrückt.

Zur Erzeugung des Druckstoßes in den Nebenkanalanordnungen wird entweder von einem in der Vorrichtung zur Dosierung vorgesehenen Mittel zur Druckerzeugung oder von einem externen Mittel zur Druckerzeugung ein Druckstoß in die zwischen der Folie 21 und dem zweiten Körper 22 vorgesehenen Kammer 23 geleitet. Der Druckstoß pflanzt sich über die Folie 21 zu den ersten Ausnehmungen 2 fort. Von diesen ersten Ausnehmungen 2, welche deshalb als Mittel zur Übertragung (Übertragungsmittel) eines Druckimpulses bezeichnet werden, pflanzt sich der Druckstoß dann über die Nebenkanäle N bis zu den Auslässen 6 fort und drückt dabei die in den Nebenkanalabschnitten 10, 11, 12 und den Mitteln zur Dosierung vorgesehenen Flüssigkeitsmengen aus dem ersten Körper 20a heraus.

Die Folie 21 verhindert beim Herausschleudern der in dem ersten Körper 20a enthaltenen dosierten Flüssigkeitsmenge aus einem der Nebenkanalanordnungen 4, 10, 11, 12 aus Nebenkanalabschnitten 10, 11, 12 und dem Mittel zur Dosierung (zweite Ausnehmung 4), dass ein weiterhin in der Ausnehmung zwischen der Membran 21 und dem zweiten Körper 22 aufgebauter Druck über diese Nebenkanalanordnungen 4, 10, 11, 12 entlüftet wird. Dieses würde nämlich unter Umständen dazu führen, dass in der Ausnehmung zwischen der Folie 21 und dem zweiten Körper 22 kein ausreichender Druck mehr vorhanden ist, um auch die übrigen Nebenkanalanordnungen der Vorrichtungen zu entleeren, das heißt die dosierten Flüssigkeitsmengen aus diesen Nebenkanalanordnungen herauszuschleudern.

Bevor die in eine nicht erfindungsgemäße Vorrichtung eingeführte Flüssigkeit über die Auslässe 6 dosiert ausgestoßen wird, kann in dem Hauptkanal 8 enthaltene Flüssigkeit abgeleitet werden. Dazu wird entweder an dem Einlass 1 ein Überdruck angelegt, welcher die in dem Hauptkanal 8 enthaltene Flüssigkeitsmenge über den Kanal 13 zum Abfallsammler 7 drückt oder aber an dem Abfallsammler 7 wird ein Unterdruck angelegt, welcher über den Kanal 13 die Flüssigkeit aus dem Hauptkanal 8 heraussaugt. Der Transport kann auch durch die Wirkung von Kapillarkräften erfolgen.

Ein derartiges Entleeren des Hauptkanals 8 ist vorteilhaft, wenn beispielsweise bei einer erfindungsgemäßen Vorrichtung mit einem ersten Körper 20b gemäß der Fig. 3 und 4 Ventile 14 im Hauptkanal 8 vorgesehen sind. Diese Ventile 14, die in Fig. 3 und 4 schematisch angedeutet sind, sind jeweils vor und hinter einem Verbindungspunkt zwischen Hauptkanal 8 und den Nebenkanälen vorgesehen. Dadurch können die einzelnen Nebenkanalanordnungen 4, 10, 11, 12 voneinander entkoppelt werden. Die Ventile 14 bilden daher Entkopplungsmittel. Sobald die Ventile 14 gesperrt sind, ist eine Verbindung zwischen zwei Nebenkanalanordnungen 4, 10, 11, 12 über den Hauptkanal 8 nicht mehr möglich. Die Ventile 14 sind vorteilhaft als Kombination aus einer dritten Ausnehmung und der ersten Folie 21 vorgesehen. Der zweite Körper weist eine Ausnehmung auf, welche die Ventile 14 übergreift und so eine zweite Kammer 34 bildet. Auch bei den Ventilen 14 bzw. den dritten Ausnehmungen und den diese dritten Ausnehmungen abdeckenden Abschnitte der ersten Folie gibt das Aspektenverhältnis vor, ob und bei welchem Druck die Folie 21 ein Durchdringen von Flüssigkeit durch die dritte Ausnehmung des Ventils 14 verhindert. Ebenso ist dadurch ein getrenntes Ansteuern der Auslässe möglich.

Das Entleeren des Hauptkanals 8 ist bei diesen Ventilen 14 vor einer Betätigung der Ventile 14 sinnvoll, da ansonsten der Raum in der Ausnehmung von imkompressibler Flüssigkeit eingenommen wird, welche ein Verschließen der Ausnehmung durch die Folie 21 bei einer entsprechenden Druckbeaufschlagung der Folie 21 erschwert oder es wird bei Betätigung der Ventile 14 Flüssigkeit in Einlass 1, Abfallsammer 7 oder die ersten Ausnehmungen 2 gedrückt.

Durch die Entkopplung der Nebenkanalanordnungen 4, 10, 11, 12 über die Ventile 14 ist es möglich bei einer entsprechenden Einrichtung bzw. Beaufschlagung der Mittel zur Übertragung des Druckimpulses die Nebenkanalanordnungen 4, 10, 11, 12 getrennt voneinander anzusteuern. Nachdem dann eine erste Nebenkanalanordnung 4, 10, 11, 12 geleert wurde, verhindert auch hier die Folie 21 als Mittel zur Verhinderung eine strömungstechnische Verbindung von dem Nebenkanalabschnitt 9 bzw. der ersten Ausnehmung 2 zu einem jenseits der Folie 21 liegenden Teil der Vorrichtung zur Dosierung. Dadurch kann die Kammer, welche zwischen der Folie 21 und dem zweiten Körper 22 ausgebildet ist, nicht über eine als erste entleerten Nebenkanalanordnung entlüftet werden.

Das in Fig. 5 und 6 vergrößerte Ausführungsbeispiel für ein Ventil weist eine dritte Ausnehmung 30 auf, welche eine konkave Wölbung hat, die die Form eines Abschnitts eines Rotationsellipsoids hat. Von dem Ventil ausgehend erstrecken sich Abschnitte des Hauptkanals 8, die über Eintrittsöffnungen 35 in die dritte Ausnehmung 30 münden. Die Ausnehmung 30 und die sich daran anschließenden Abschnitte des Hauptkanals 8 sind von der ersten Folie 21 abgedeckt. Vom Rand 31 der Ausnehmung 30 fallen die seitlichen Begrenzungsflächen 33 flach zum Boden 32 der Ausnehmung ab. Der Winkel zwischen den seitlichen Begrenzungsflächen 33 und der an die erste Folie 21 anstoßenden Außenfläche des ersten Körpers im Bereich des Ventils ist kleiner als 45°.

Zur Betätigung des in den Fig. 5 und 6 dargestellten Ventils wird das Druckmedium, welches in der zweiten die dritte Ausnehmung 30 übergreifenden zweiten Kammer 34 enthalten ist, mit einem Druck beaufschlagt, wird die Folie 21 im Bereich der Ausnehmung 30 nach Innen gedrückt. Dadurch wird der Strömungswiderstand zwischen den beiden Eintrittsöffnungen 35 der Abschnitte des Hauptkanals 8 vergrößert. Ist der Druck auf die erste Folie 21 im Bereich der dritten Ausnehmung 30 groß genug, legt sich die erste Folie 21 sogar an dem Boden 32 und den Seitenwänden 33 flächig an, wo eine strömungstechnische Verbindung zwischen den Eintrittsöffnungen 35 unmöglich ist.

Eine Variante für das in den Fig. 5 und 6 dargestellte erste Ventil ist das in den Fig. 7 und 8 dargestellte zweite Ventil. Die beiden Ventile unterscheiden sich dadurch, dass die Tiefe der dritten Ausnehmung 30 beim zweiten Ventil gemäß der Fig. 7 oder 8 im Verhältnis zur Tiefe des Hauptkanals geringer ist. Dadurch zieht sich der Hauptkanal 8 in Form einer Nut durch die dritte Ausnehmung 30 hindurch. Die Nut im Boden 32 durch die dritte Ausnehmung 30 hat bei geöffnetem Ventil den Vorteil, dass bei einem Eintreten einer Flüssigkeit, welche durch den Hauptkanal 8 und durch das Ventil hindurchgeleitet werden soll, die Benetzung zumindest der Nut im Boden 32 des Ventils ohne die Einwirkung äußerer Kräfte erfolgen kann. Der Meniskus einer Flüssigkeit kann sich daher allein auf Grund der Kapillarkräfte durch das Ventil von einer Eintrittsöffnung 35 zur gegenüberliegenden Eintrittsöffnung 35 bewegen.

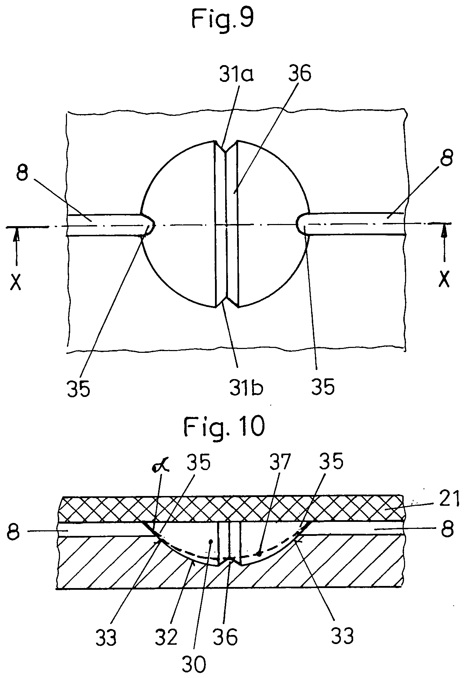

Das in den Fig. 9 und 10 dargestellte Ventil entspricht weitgehend dem Ventil gemäß der Fig. 5 und 6. Die Ausnehmung 30 ist im Unterschied zu dem Ventil gemäß der Fig. 5 und 6 sphärisch gewölbt. Die Ausnehmung 30 erscheint daher in der Draufsicht kreisförmig. Die Ausnehmung 30 wird durch einen Steg 36 in zwei jeweils den beiden Eintrittsöffnungen 35 der Abschnitte des Hauptkanals 8 zugewandten Hälften geteilt. Der Steg 36 erstreckt sich dabei von einem ersten Rand 31a zu einem gegenüberliegenden Rand 31b der Ausnehmung. Bei einem geschlossenen Ventil legt sich die erste Folie mit ihrer Unterseite auf Grund des auf die erste Folie 21 einwirkenden Drucks an der oberen Kante des Stegs 36 an. Dadurch bildet sich zwischen der ersten Folie 21 bzw. der Unterseite 37 der ersten Folie 21 und dem Steg 36 ein dichtender Verschluss. Eine strömungstechnische Verbindung zwischen den beiden Hälften der Ausnehmung 30, die beiderseits des Stegs 36 liegen, ist somit nicht mehr möglich. Eine Flüssigkeit kann somit nicht durch das Ventil hindurchtreten.

### Bezugszeichenliste

- 1: Einlass
- 2: erste Ausnehmungen/Übertragungsmittel
- 3: erste Kapillarstopps
- 4: zweite Ausnehmungen/Mittel zur Dosierung
- 5: zweite Kapillarstopps
- 6: Auslässe
- 7: Abfallsammler
- 8: Hauptkanal
- N: Nebenkanäle
- 9: Nebenkanalabschnitte
- 10: Nebenkanalabschnitte
- 11: Nebenkanalabschnitte
- 12: Nebenkanalabschnitte
- 13: Kanal zum Abfallsammler
- 14: Ventile
- 20a: erster Körper
- 20b: erster Körper
- 21: Membran/Mittel zur Verhinderung
- 22: zweiter Körper
- 23: (erste) Kammer
- 30: dritte Ausnehmung
- 31, 31a, 31b: Ränder der dritten Ausnehmung
- 32: Boden
- 33: seitliche Begrenzungsflächen
- 34: zweite Kammer
- 35: Eintrittsöffnungen
- 36: Steg
- 37: Unterseite der Folie bei betätigtem Ventil
- α: Winkel

## Patentansprüche

1. Vorrichtung zur parallelen Dosierung einer Flüssigkeit, wobei
- die Vorrichtung einen Hauptkanal (8), Nebenkanäle (N), einen Einlass (1) und Auslässe (6) aufweist,
- der Hauptkanal (8) mit dem Einlass (1) verbunden ist,
- die Nebenkanäle (N) mit je einem Auslass verbunden sind und
- die Nebenkanäle (N) mit dem Hauptkanal (8) verbunden sind,
**dadurch gekennzeichnet, dass**
- die Vorrichtung einen ersten Körper (20a, 20b) aufweist und der erste Körper (20a, 20b) den Hauptkanal (8), die Nebenkanäle (N), den Einlass (1) und die Auslässe aufweist,
- die Vorrichtung zumindest eine erste Kammer mit einem ersten Druckmedium aufweist,
- der erste Körper (20a, 20b) der Vorrichtung Mittel zur Übertragung (Übertragungsmittel 2) von Druckstößen des ersten Druckmediums von der ersten Kammer zu den Nebenkanälen aufweist,
- jedes Übertragungsmittel (2) mit einem Nebenkanal (N) verbunden ist und
- den Übertragungsmitteln (2) zumindest ein Mittel (21) zur Verhinderung einer strömungstechnischen Verbindung zwischen den Nebenkanälen (N) und der Kammer zugeordnet ist,
- die Vorrichtung in dem Hauptkanal (8) steuerbare Mittel zur strömungstechnischen Entkopplung (Entkopplungsmittel 14) aufweist,
- die Entkopplungsmittel (14) zwischen dem Einlass (1) und der ersten Verbindung des Hauptkanals (8) mit einem der Nebenkanäle (N) und/oder zwischen allen Verbindungen von Hauptkanal (8) und einem der Nebenkanäle (N) vorgesehen sind und
- die Entkopplungsmittel (14) Ventile sind.

2. Vorrichtung nach einem der vorhergehenden Ansprüche,
**dadurch gekennzeichnet, dass** die Mittel zur Verhinderung Abschnitte einer ersten elastischen und zumindest im Wesentlichen undurchlässigen Folie (21) sind.

3. Vorrichtung nach dem vorhergehenden Anspruch, **dadurch gekennzeichnet, dass** die Folie ein Elastomer ist.

4. Vorrichtung nach einem der vorhergehenden Ansprüche,
**dadurch gekennzeichnet, dass** der Hauptkanal (8) und die Nebenkanäle (N) als Nuten in einer ersten Außenfläche des ersten Körpers (20a, 20b) vorgesehen sind.

5. Vorrichtung nach einem der vorhergehenden Ansprüche,
**dadurch gekennzeichnet, dass** der Hauptkanal (8) und/oder die Nebenkanäle (N) zumindest abschnittsweise Kapillare sind.

6. Vorrichtung nach Anspruch 5, **dadurch gekennzeichnet, dass** die an den Hauptkanal (8) anstoßenden Abschnitte (10, 11) der Nebenkanäle (N) Kapillare sind.

7. Vorrichtung nach einem der vorhergehenden Ansprüche,
**dadurch gekennzeichnet, dass** die Übertragungsmittel als erste Ausnehmungen (2) ausgebildet sind.

8. Vorrichtung nach dem vorhergehenden Anspruch, **dadurch gekennzeichnet, dass** die ersten Ausnehmungen (2) an einem ersten Ende jedes Nebenkanals (N) und die Auslässe (6) an zweiten Enden jedes Nebenkanals (N) vorgesehen sind.

9. Vorrichtung nach einem der Ansprüche 2 bis 8, **dadurch gekennzeichnet, dass** die erste Folie (21) auf der ersten Außenfläche aufliegt.

10. Vorrichtung nach einem der Ansprüche 2 bis 9, **dadurch**
**gekennzeichnet, dass** die erste Folie durch Bonden an dem ersten Körper (20a, 20b) befestigt ist.

11. Vorrichtung nach einem der Ansprüche 7 bis 10, **dadurch**
**gekennzeichnet, dass** die erste Folie (21) zumindest die ersten Ausnehmungen (2) abdeckt.

12. Vorrichtung nach einem der Ansprüche 7 bis 11, **dadurch gekennzeichnet, dass** die erste Folie im Bereich der ersten Ausnehmung (2) durch Bonden an dem Körper (20a, 20b) befestigt ist.

13. Vorrichtung nach einem der vorhergehenden Ansprüche,
**dadurch gekennzeichnet, dass** die Vorrichtung einen zweiten Körper (22) aufweist.

14. Vorrichtung nach Anspruch 13, **dadurch gekennzeichnet, dass** der zweite Körper (22) auf der ersten Folie (21) aufliegt, wobei der zweite Körper (22) und die erste Folie (21) mindestens die erste Kammer (23) einschließen.

15. Vorrichtung nach Anspruch 14, **dadurch gekennzeichnet, dass** die erste Kammer unter Zwischenschaltung der ersten Folie mit den Übertragungsmitteln verbunden ist.

16. Vorrichtung nach einem der Ansprüche 2 bis 15, **dadurch gekennzeichnet, dass** das erste Druckmedium unter einem Druck steht, der einen ersten Betrag hat und der sicherstellt, dass die erste Folie (21) an dem ersten Körper (20a, 20b) festgelegt ist.

17. Vorrichtung nach einem der vorhergehenden Ansprüche,
**dadurch gekennzeichnet, dass** in den Nebenkanalabschnitten (9, 10, 11, 12) Mittel (4) zur Dosierung der Flüssigkeit (Dosierungsmittel) vorgesehen sind.

18. Vorrichtung nach dem vorhergehenden Anspruch, **dadurch gekennzeichnet, dass** die Dosierungsmittel (4) zwischen den Auslässen (6) und der Verbindung des zugeordneten Nebenkanals (9, 10, 11, 12) und des Hauptkanals (8) vorgesehen sind.

19. Vorrichtung nach dem vorhergehenden Anspruch, **dadurch gekennzeichnet, dass** die Dosierungsmittel zweite Ausnehmungen (4) in der ersten Außenfläche des ersten Körpers (20a, 20b) sind.

20. Vorrichtung nach dem vorhergehenden Anspruch, **dadurch gekennzeichnet, dass** die zweiten Ausnehmungen (4) von der ersten Folie (21) abgedeckt sind.

21. Vorrichtung nach Anspruch 19, **dadurch gekennzeichnet, dass** die zweiten Ausnehmungen (4) von einer zweiten Folie abgedeckt sind.

22. Vorrichtung nach einem der Ansprüche 1 bis 21, **dadurch gekennzeichnet, dass** die Ventile (14) durch je eine dritte Ausnehmung (30) und die erste Folie (21) oder die zweite Folie oder eine dritte Folie gebildet sind.

23. Vorrichtung nach dem vorhergehenden Anspruch, **dadurch gekennzeichnet, dass** die erste Kammer (23) die erste, zweite oder dritte Folie in Bereiche der dritten Ausnehmung (30) übergreift.

24. Vorrichtung nach Anspruch 22, **dadurch gekennzeichnet, dass** der zweite Körper und der erste Körper (20a, 20b) eine zweite Kammer (34) einschließen, die die erste, zweite oder dritte Folie (35) im Bereich der dritten Ausnehmungen (30) übergreift.

25. Vorrichtung nach dem vorhergehenden Anspruch, **dadurch gekennzeichnet, dass** die zweite Kammer (34) ein zweites Druckmedium enthält.

26. Vorrichtung nach einem der Ansprüche 13 bis 25, **dadurch gekennzeichnet, dass** der zweite Körper Mikrostrukturelemente aufweist.

27. Vorrichtung nach den vorhergehenden Ansprüchen, **dadurch gekennzeichnet, dass** die Mikrostrukturelemente in die erste und/oder zweite Kammer (23) hineinragen.

28. Vorrichtung nach dem vorhergehenden Anspruch, **dadurch gekennzeichnet, dass** die Mikrostrukturelemente die erste Folie (21) an dem ersten Körper (20a, 20b) festlegen.

29. Vorrichtung nach einem der Ansprüche 1 bis 28, **dadurch gekennzeichnet, dass** die erste und/oder zweite Kammer (23) eine Höhe von 0,1 mm bis 3mm hat.

30. Vorrichtung nach einem der vorhergehenden Ansprüche,
**dadurch gekennzeichnet, dass** die erste und/oder zweite Kammer (23) mit einem Mittel zur Erzeugung von Druckstößen verbindbar ist.

31. Vorrichtung nach einem der vorhergehenden Ansprüche,
**dadurch gekennzeichnet, dass** die Vorrichtung ein Mittel zur Erzeugung von Druckstößen aufweist.

32. Vorrichtung nach einem der Ansprüche 3 bis 31, **dadurch gekennzeichnet, dass** die erste und/oder zweite Kammer (23) eine vorzugsweise von einem Teil des zweiten Körpers (22) gebildete Wand hat, die unter Einwirkung eines Mittels zur Erzeugung eines Druckstoßes in das Innere der Kammer (23) auslenkbar ist.

33. Vorrichtung nach einem der Ansprüche 31 bis 32, **dadurch gekennzeichnet, dass** das Mittel zur Erzeugung des Druckstoßes ein piezoelektrisches Element ist.

34. Vorrichtung nach einem der Ansprüche 24 bis 33, **dadurch gekennzeichnet, dass** die erste Kammer (23) und die zweite Kammer (34) getrennt ansteuerbar sind.

35. Vorrichtung nach einem der Ansprüche 22 bis 34, **dadurch gekennzeichnet, dass** die dritten Ausnehmungen (30) von zumindest einem Teil der Ränder (31) zum Boden (32) flach abfallende seitliche Begrenzungsflächen (33) haben.

36. Vorrichtung nach dem vorhergehenden Anspruch, **dadurch gekennzeichnet, dass** flach abfallende seitliche Begrenzungsflächen (33) in einem Winkel (α) zwischen 5° bis 45° geneigt ist.

37. Vorrichtung nach einem der Ansprüche 22 bis 36, **dadurch gekennzeichnet, dass** die dritten Ausnehmungen (30) eine konkave Wölbung haben.

38. Vorrichtung nach Anspruch 37, **dadurch gekennzeichnet, dass** die Wölbung sphärisch ist.

39. Vorrichtung nach Anspruch 37, **dadurch gekennzeichnet, dass** die Wölbung aspärisch ist.

40. Vorrichtung nach Anspruch 37, **dadurch gekennzeichnet, dass** die Wölbung zylindrisch ist.

41. Vorrichtung nach einem der Ansprüche 35 bis 40 **dadurch gekennzeichnet, dass** zwischen zwei Eintrittsöffnungen (35) von Abschnitten des Hauptkanals (8) in zumindest einen Teil der dritten Ausnehmungen (30) sich von einem ersten Rand (31a) über die seitlichen Begrenzungsflächen (33) und den Boden (32) zu einem zweiten Rand (31b) ein Steg (36) erstreckt.

42. Vorrichtung nach einem der Ansprüche 22 bis 41, **dadurch gekennzeichnet, dass** die dritte Ausnehmung (30) eine Tiefe hat, die dem 0,9 bis 1,5-fachen der Tiefe des Hauptkanals (8) entspricht.

43. Vorrichtung nach einem der Ansprüche 22 bis 42, **dadurch gekennzeichnet, dass** die dritte Ausnehmung (30) eine Tiefe hat, die dem 0,9 bis 1-fachen der Tiefe des Hauptkanals (8) entspricht, wobei zwei Eintrittsöffnungen (35) von Abschnitten des Hauptkanals (8) über eine Nut (36) miteinander verbunden sind.

## Claims

1. Apparatus for parallel dosing of a liquid, wherein
- the apparatus has a main channel (8), secondary channels (N), an inlet (1) and outlets (6),
- the main channel (8) is connected to the inlet (1),
- the secondary channels (N) are each connected to an outlet and
- the secondary channels (N) are connected to the main channel (8),
**characterised in that**
- the apparatus has a first body (20a, 20b) and the first body (20a, 20b) has the main channel (8), the secondary channels (N), the inlet (1) and the outlets,
- the apparatus has at least a first chamber with a first pressure medium,
- the first body (20a, 20b) of the apparatus comprises means for transmitting (transmission means 2) pressure surges of the first pressure medium from the first chamber to the secondary channels,
- each transmission means (2) is connected to a secondary channel (N) and
- at least one means (21) for preventing a fluidic connection between the secondary channels (N) and the chamber is assigned to the transmission means (2),
- the apparatus in the main channel (8) has controllable means for fluidic decoupling (decoupling means 14),
- the decoupling means (14) are provided between the inlet (1) and the first connection of the main channel (8) with one of the secondary channels (N) and/or between all connections of the main channel (8) and one of the secondary channels (N) and
- the decoupling means (14) are valves.

2. Apparatus according to one of the preceding claims **characterised in that** the means for prevention are portions of a first elastic and at least impermeable film (21).

3. Apparatus according to the preceding claim **characterised in that** the film is an elastomer.

4. Apparatus according to one of the preceding claims, **characterised in that** the main channel (8) and the secondary channels (N) are provided as grooves in a first outer surface of the first body (20a, 20b).

5. Apparatus according to one of the preceding claims **characterised in that** the main channel (8) and/or the secondary channels (N) are at least partial capillaries.

6. Apparatus according to claim 5, **characterised in that** the portions (10, 11) of the secondary channels (N) abutting the main channel (8) are capillaries.

7. Apparatus according to one of the preceding claims **characterised in that** the transmission means are formed as first recesses (2).

8. Apparatus according to the preceding claim **characterised in that** the first recesses (2) are provided at a first end of each secondary channel (N) and the outlets (6) are provided at the second ends of each secondary channel (N).

9. Apparatus according to one of claims 2 to 8 **characterised in that** the first film (21) rests on the first outer surface.

10. Apparatus according to one of claims 2 to 9, **characterised in that** the first film is attached by bonding to the first body (20a, 20b).

11. Apparatus according to one of claims 7 to 10 **characterised in that** the first film (21) covers at least the first recesses (2).

12. Apparatus according to one of claims 7 to 11, **characterised in that** the first film is attached in the region of the first recess (2) by bonding to the body (20a, 20b).

13. Apparatus according to one of the preceding claims **characterised in that** the apparatus comprises a second body (22).

14. Apparatus according to claim 13, **characterised in that** the second body (22) rests on the first film (21), wherein the second body (22) and the first film (21) include at least the first chamber (23).

15. Apparatus according to claim 14, **characterised in that** the first chamber is connected with the interposition of the first film with the transmission means.

16. Apparatus according to one of claims 2 to 15, **characterised in that** the first pressure medium is under a pressure having a first amount and ensures that the first film (21) is fixed on the first body (20a, 20b).

17. Apparatus according to one of the preceding claims **characterised in that** in the secondary channel sections (9, 10, 11, and 12) means (4) are provided for dosing the liquid (dosing means).

18. Apparatus according to the preceding claim **characterised in that** the dosing means (4) are provided between the outlets (6) and the connection of the associated secondary channel (9, 10, 11, 12) and the main channel (8).

19. Apparatus according to the preceding claim, **characterised in that** the dosing means are second recesses (4) in the first outer surface of the first body (20a, 20b).

20. Apparatus according to the preceding claim **characterised in that** the second recesses (4) are covered by the first film (21).

21. Apparatus according to claim 19, **characterised in that** the second recesses (4) are covered by a second film.

22. Apparatus according to one of claims 1 to 21 **characterised in that** the valves (14) are each formed by a third recess (30) and the first film (21) or the second film or a third film.

23. Apparatus according to the preceding claim **characterised in that** the first chamber (23) engages over the first, second or third film in areas of the third recess (30).

24. Apparatus according to claim 22, **characterised in that** the second body and the first body (20a, 20b) include a second chamber (34) which overlap the first, second or third film (35) in the region of the third recesses (30).

25. Apparatus according to the preceding claim **characterised in that** the second chamber (34) contains a second pressure medium.

26. Apparatus according to one of claims 13 to 25 **characterised in that** the second body comprises microstructure elements.

27. Apparatus according to the preceding claims **characterised in that** the microstructure elements protrude into the first and/or second chamber (23).

28. Apparatus according to the preceding claim, **characterised in that** the microstructure elements define the first film (21) on the first body (20a, 20b).

29. Apparatus according to one of claims 1 to 28 **characterised in that** the first and/or second chamber (23) has a height of 0.1mm to 3mm.

30. Apparatus according to one of the preceding claims **characterised in that** the first and/or second chamber (23) is connectible to a means for generating pressure surges.

31. Apparatus according to one of the preceding claims **characterised in that** the apparatus comprises means for generating pressure surges.

32. Apparatus according to one of claims 3 to 31, **characterised in that** the first and/or second chamber (23) has a wall, preferably formed by a part of the second body (22), which can be deflected under the action of a means for generating pressure pulse inside the chamber (23).

33. Apparatus according to one of claims 31 to 32 **characterised in that** the means for generating the pressure surge is a piezoelectric element.

34. Apparatus according to one of claims 24 to 33 **characterised in that** the first chamber (23) and the second chamber (34) can be activated separately.

35. Apparatus according to one of claims 22 to 34 **characterised in that** the third recesses (30) of at least a part of the edges (31) to the bottom (32) have flat sloping lateral boundary surfaces (33).

36. Apparatus according to the preceding claim, **characterised in that** flat sloping lateral boundary surfaces (33) is inclined at an angle (α) between 5° to 45°.

37. Apparatus according to one of claims 22 to 36 **characterised in that** the third recesses (30) have a concave curvature.

38. Apparatus according to claim 37, **characterised in that** the curvature is spherical.

39. Apparatus according to claim 37, **characterised in that** the curvature is aspheric.

40. Apparatus according to claim 37, **characterised in that** the curvature is cylindrical.

41. Apparatus according to one of claims 35 to 40, **characterised in that** between two inlet openings (35) of portions of the main channel (8) in at least a part of the third recesses (30), a web (36) extends from a first edge (31a) on the lateral boundary surfaces (33) and the bottom (32) to a second edge (31b).

42. Apparatus according to one of claims 22 to 41 **characterised in that** the third recess (30) has a depth that corresponds to 0.9 to 1.5-fold the depth of the main channel (8).

43. Apparatus according to one of claims 22 to 42 **characterised in that** the third recess (30) has a depth that corresponds to 0.9 to 1-fold the depth of the main channel (8), wherein two inlet openings (35) of portions of the main channels (8) are interconnected by a groove (36).

## Revendications

1. Dispositif destiné au dosage parallèle d'un liquide,
dans lequel
- le dispositif comporte un canal principal (8), des canaux secondaires (N), une entrée (1) et des sorties (6),
- le canal principal (8) est relié à l'entrée (1),
- les canaux secondaires (N) sont reliés chacun à une sortie et
- les canaux secondaires (N) sont reliés au canal principal (8),
**caractérisé en ce que**
- le dispositif comporte un premier corps (20a, 20b) et le premier corps (20a, 20b) comporte le canal principal (8), les canaux secondaires (N), l'entrée (1) et les sorties,
- le dispositif comporte au moins une première chambre avec un premier fluide de pression,
- le premier corps (20a, 20b) du dispositif comporte des moyens destinés à la transmission (moyens de transmission 2) de chocs de pression du premier fluide de pression de la première chambre aux canaux secondaires,
- chaque moyen de transmission (2) est relié à un canal secondaire (N) et
- au moins un moyen (21) destiné à empêcher une liaison de technique des fluides entre les canaux secondaires (N) et la chambre est associé aux moyens de transmission (2),
- le dispositif comporte dans le canal principal (8) des moyens pouvant être commandés en vue du découplage en technique des fluides (moyens de découplage 14),
- les moyens de découplage (14) sont prévus entre l'entrée (1) et la première liaison du canal principal (8) avec l'un des canaux secondaires (N) et/ou entre toutes les liaisons du canal principal (8) et l'un des canaux secondaires (N) et
- les moyens de découplage (14) sont des soupapes.

2. Dispositif selon l'une des revendications précédentes, **caractérisé en ce que** les moyens destinés à empêcher une liaison sont des tronçons d'une première feuille (21) élastique et au moins globalement imperméable.

3. Dispositif selon l'une des revendications précédentes, **caractérisé en ce que** la feuille est un élastomère.

4. Dispositif selon l'une des revendications précédentes, **caractérisé en ce que** le canal principal (8) et les canaux secondaires (N) sont prévus sous forme de rainures dans une première surface extérieure du premier corps (20a, 20b).

5. Dispositif selon l'une des revendications précédentes, **caractérisé en ce que** le canal principal (8) et/ou les canaux secondaires (N) sont au moins en partie des tubes capillaires.

6. Dispositif selon la revendication 5, **caractérisé en ce que** les tronçons (10, 11), adjacents au canal principal (8), des canaux secondaires (N) sont des tubes capillaires.

7. Dispositif selon l'une des revendications précédentes, **caractérisé en ce que** les moyens de transmission sont conçus sous forme de premiers évidements (2).

8. Dispositif selon la revendication précédente, **caractérisé en ce que** les premiers évidements (2) sont prévus au niveau d'une première extrémité de chaque canal secondaire (N) et les sorties (6) sont prévues au niveau de deuxièmes extrémités de chaque canal secondaire (N).

9. Dispositif selon l'une des revendications 2 à 8, **caractérisé en ce que** la première feuille (21) repose sur la première surface extérieure.

10. Dispositif selon l'une des revendications 2 à 9, **caractérisé en ce que** la première feuille est fixée par une liaison du type bonding au premier corps (20a, 20b).

11. Dispositif selon l'une des revendications 7 à 10, **caractérisé en ce que** la première feuille (21) recouvre au moins les premiers évidements (2).

12. Dispositif selon l'une des revendications 7 à 11, **caractérisé en ce que**, dans la zone du premier évidement (2), la première feuille est fixée par une liaison du type bonding au corps (20a, 20b).

13. Dispositif selon l'une des revendications précédentes, **caractérisé en ce que** le dispositif comporte un deuxième corps (22).

14. Dispositif selon la revendication 13, **caractérisé en ce que** le deuxième corps (22) repose sur la première feuille (21), le deuxième corps (22) et la première feuille (21) enfermant au moins la première chambre (23).

15. Dispositif selon la revendication 14, **caractérisé en ce que** la première chambre est reliée aux moyens de transmission en intercalant la première feuille.

16. Dispositif selon l'une des revendications 2 à 15, **caractérisé en ce que** le premier fluide de pression est soumis à une pression qui a une première valeur et qui garantit que la première feuille (21) est fixée au premier corps (20a, 20b).

17. Dispositif selon l'une des revendications précédentes, **caractérisé en ce que** des moyens (4) destinés au dosage du liquide (moyens de dosage) sont prévus dans les tronçons de canaux secondaires (9, 10, 11, 12).

18. Dispositif selon la revendication précédente, **caractérisé en ce que** les moyens de dosage (4) sont prévus entre les sorties (6) et la liaison du canal secondaire (9, 10, 11, 12) associé et du canal principal (8).

19. Dispositif selon la revendication précédente, **caractérisé en ce que** les moyens de dosage sont des deuxièmes évidements (4) dans la première surface extérieure du premier corps (20a, 20b).

20. Dispositif selon la revendication précédente, **caractérisé en ce que** les deuxièmes évidements (4) sont recouverts par la première feuille (21).

21. Dispositif selon la revendication 19, **caractérisé en ce que** les deuxièmes évidements (4) sont recouverts par une deuxième feuille.

22. Dispositif selon l'une des revendications 1 à 21, **caractérisé en ce que** les soupapes (14) sont formées par à chaque fois un troisième évidement (30) et la première feuille (21) ou la deuxième feuille ou une troisième feuille.

23. Dispositif selon la revendication précédente, **caractérisé en ce que** la première chambre (23) déborde de la première, deuxième ou troisième feuille dans des zones du troisième évidement (30).

24. Dispositif selon la revendication 22, **caractérisé en ce que** le deuxième corps et le premier corps (20a, 20b) enferment une deuxième chambre (34) qui déborde de la première, deuxième ou troisième feuille (35) dans la zone des troisièmes évidements (30).

25. Dispositif selon la revendication précédente, **caractérisé en ce que** la deuxième chambre (34) contient un deuxième fluide de pression.

26. Dispositif selon l'une des revendications 13 à 25, **caractérisé en ce que** le deuxième corps comporte des éléments de microstructure.

27. Dispositif selon l'une des revendications précédentes, **caractérisé en ce que** les éléments de microstructure pénètrent à l'intérieur de la première et/ou deuxième chambre (23).

28. Dispositif selon la revendication précédente, **caractérisé en ce que** les éléments de microstructure fixent la première feuille (21) au premier corps (20a, 20b).

29. Dispositif selon l'une des revendications 1 à 28, **caractérisé en ce que** la première et/ou deuxième chambre (23) a une hauteur de 0,1 mm à 3 mm.

30. Dispositif selon l'une des revendications précédentes, **caractérisé en ce que** la première et/ou deuxième chambre (23) peut être reliée à un moyen destiné à produire des chocs de pression.

31. Dispositif selon l'une des revendications précédentes, **caractérisé en ce que** le dispositif comporte un moyen destiné à produire des chocs de pression.

32. Dispositif selon l'une des revendications 3 à 31, **caractérisé en ce que** la première et/ou deuxième chambre (23) a une paroi qui est formée de préférence par une partie du deuxième corps (22) et qui peut être déviée dans l'intérieur de la chambre (23) sous l'action d'un moyen destiné à produire un choc de pression.

33. Dispositif selon l'une des revendications 31 à 32, **caractérisé en ce que** le moyen destiné à produire le choc de pression est un élément piézoélectrique.

34. Dispositif selon l'une des revendications 24 à 33, **caractérisé en ce que** la première chambre (23) et la deuxième chambre (34) peuvent être commandées séparément.

35. Dispositif selon l'une des revendications 22 à 34, **caractérisé en ce que** les troisièmes évidements (30) ont des surfaces de délimitation latérales (33) qui descendent de manière plane d'au moins une partie des bords (31) jusqu'au fond (32).

36. Dispositif selon la revendication précédente, **caractérisé en ce que** des surfaces de délimitation latérales (33) qui descendent de manière plane sont inclinées d'un angle (α) compris entre 5° et 45°.

37. Dispositif selon l'une des revendications 22 à 36, **caractérisé en ce que** les troisièmes évidements (30) ont une courbure concave.

38. Dispositif selon la revendication 37, **caractérisé en ce que** la courbure est sphérique.

39. Dispositif selon la revendication 37, **caractérisé en ce que** la courbure est asphérique.

40. Dispositif selon la revendication 37, **caractérisé en ce que** la courbure est cylindrique.

41. Dispositif selon l'une des revendications 35 à 40, **caractérisé en ce que**, entre deux ouvertures d'entrée (35) de tronçons du canal principal (8) dans au moins une partie des troisièmes évidements (30), une traverse (36) s'étend d'un premier bord (31a) à un deuxième bord (31b) au-dessus des surfaces de délimitation latérales (33) et du fond (32).

42. Dispositif selon l'une des revendications 22 à 41, **caractérisé en ce que** le troisième évidement (30) a une profondeur qui correspond à 0,9 à 1,5 fois la profondeur du canal principal (8).

43. Dispositif selon l'une des revendications 22 à 42, **caractérisé en ce que** le troisième évidement (30) a une profondeur qui correspond à 0,9 à 1 fois la profondeur du canal principal (8), deux ouvertures d'entrée (35) de tronçons du canal principal (8) étant reliées ensemble par l'intermédiaire d'une rainure (36).
